# EUROPÄISCHE PATENTSCHRIFT

(11) **EP 0 752 094 B1**
(45) Veröffentlichungstag und Bekanntmachung des Hinweises auf die Patenterteilung: **29.12.1997**
(21) Anmeldenummer: 95928874.7
(22) Anmeldetag: 21.03.1995
(51) Int. Cl.: G01F 15/08, G01G 1/36, G01F 1/52, G01F 1/36

(54) **VORRICHTUNG UND VERFAHREN ZUM MISCHEN, MESSEN UND FÖRDERN EINES MEHRPHASENGEMISCHES**
DEVICE AND METHOD FOR MIXING, MEASURING THE FLOW RATE OF AND SUPPLYING A MULTI-PHASE MIXTURE
DISPOSITIF ET PROCEDE POUR LE MELANGE, LA MESURE DU DEBIT ET LE TRANSFERT D'UN MELANGE MULTIPHASE

(30) Priorität: 25.03.1994 CH 905/94; 25.03.1994 CH 906/94
(43) Veröffentlichungstag der Anmeldung: 08.01.1997
(73) Patentinhaber: TOTAL Société anonyme dite :, 92800 Puteaux (FR); SULZER PUMPEN AG, CH-8401 Winterthur (CH)
(72) Erfinder: GUELICH, Johann, CH-8408 Winterthur (CH)
(74) Vertreter: Heubeck, Bernhard
(86) Internationale Anmeldenummer: EP9501054
(87) Internationale Veröffentlichungsnummer: WO9526494

(56) Entgegenhaltungen:
- EP-A- 0 493 886
- WO-A-90/13859
- FR-A- 2 610 105
- GB-A- 2 089 049

## Beschreibung

Die Erfindung betrifft eine Vorrichtung zum Mischen, Messen und Fördern eines Mehrphasengemisches gemäss dem Oberbegriff von Anspruch 1. Die Erfindung betrifft weiter ein Verfahren zum Betrieb der erfindungsgemässen Vorrichtung. Weiter betrifft die Erfindung einen Buffertank sowie eine Fördervorrichtung mit einer erfindungsgemässen Vorrichtung oder betrieben mit einem erfindungsgemässen Verfahren.

Ein Mehrphasengemisch besteht aus mindestens zwei unterschiedlichen Phasen, zum Beispiel zwei Fluidanteilen, die einen flüssigen sowie einen gas- beziehungsweise dampfförmigen Anteil aufweisen. Für bestimmte Verfahren ist er erforderlich, die Fluidanteile zu mischen oder zu homogenisieren sowie die Flussrate des Fluidstromes zu messen.

Solche Gemische treten zum Beispiel aus einem Bohrloch einer Erdölquelle aus, wobei das Gemisch unterschiedliche Gase sowie Öl und eventuell zusätzlich auch Wasser umfasst. Ölquellen können die Eigenschaft aufweisen, dass die Anteile der flüssigen und gasförmigen Komponenten zeitlich kurzfristig in einem weiten Bereich variieren.

Bekannte Vorrichtungen zum Messen eines Mehrphasengemisches lassen sich in zwei Gruppen mit grundsätzlich unterschiedlicher Messmethode unterteilen. Entweder wird die Zusammensetzung des Mehrphasengemisches direkt mit einem Densiometer gemessen, oder das Mehrphasengemisch wird aufgeteilt in einen flüssigen Fluidanteil und einen gasförmigen Fluidanteil, wobei jeder Fluidanteil mit einer separaten Messvorrichtung gemessen wird.

Aus der WO 90/13859 ist eine Vorrichtung zum Mischen und Messen eines mehrphasigen Fluides bekannt, welche ein Densiometers verwendet. Diese Vorrichtung wird zum Beispiel bei der Förderung von Rohöl verwendet. Erdölquellen liefern eine Mischung bestehend aus Gas, Öl und auch Wasser, deren Zusammensetzung aus flüssigen und gasförmigen Komponenten in einem weiten Bereich variieren kann. Die bekannte Vorrichtung weist einen Behälter auf, in den die Fluide eingeleitet werden, sowie ein perforiertes Abführrohr, um die Fluide aus dem Behälter abzuleiten und zu mischen. Der Behälter dient als Zwischenspeicher für die Fluide, sowie als Separator, in dem sich die flüssigen Fluidanteile im unteren Bereich des Behälters ansammeln und die gasförmigen Fluidanteile im oberen Bereich des Behälters. Ausserhalb des Behälters ist dem Abführrohr eine Messvorrichtung nachgeschaltet, mit einer Venturidüse, um die Flussrate zu messen, und mit einem Densiometer, um die Masse beziehungsweise die Dichte des Fluidstromes zu messen.

Diese bekannte Vorrichtung weist den Nachteil auf, dass die Messvorrichtung ausserhalb des Behälters anzuordnen ist und dass die Messvorrichtung ein Densiometer erfordert, welches üblicherweise mit Röntgen- oder Gammastrahlen arbeitet und entsprechend aufwendig und störanfällig ist.

Aus der GB-A-2'089'049 ist eine weitere Vorrichtung zum Messen eines mehrphasigen Fluides bekannt, welche das Mehrphasengemisch in einen gasförmigen Fluidanteil sowie in einen flüssigen Fluidanteil aufteilt und beide Fluidströme getrennt misst. Diese Vorrichtung weist den Nachteil auf, dass nebst einem als Zwischenspeicher dienenden Behälter ein zweiter, relativ grosser Raum zur Aufnahme einer die flüssigen Fluidanteile messenden Vorrichtung erforderlich ist. Insbesondere bedarf es einem voluminösen Messzylinder. Weiter erfordert die Messvorrichtung einen beweglich gelagerten Schwimmer, was einen erhöhten Wartungsaufwand erfordert.

Es ist Aufgabe der vorliegende Erfindung, eine Vorrichtung sowie ein Verfahren zum Mischen und Messen eines Mehrphasengemisches vorzuschlagen, das es erlaubt, die Flussrate und die Dichte eines Fluidstromes auf einfache Weise innerhalb eines Behälters zu messen.

Es ist eine weitere Aufgabe der vorliegenden Erfindung ein Verfahren zur Förderung eines Mehrphasengemisches mit einer Mehrphasenpumpe sowie eine Vorrichtung umfassend eine Mehrphasenpumpe vorzuschlagen, um ein Mehrphasengemisch zu fördern, dessen Zusammensetzung an flüssigen und gasförmigen Anteilen Schwankungen aufweisen kann.

Diese Aufgabe wird gelöst mit einer Vorrichtung gemäss den kennzeichnenden Merkmalen von Anspruch 1. Die Unteransprüche 2 bis 9 beziehen sich auf weitere, vorteilhafte Ausgestaltungen der Erfindung. Die Aufgabe wird weiter gelöst mit einem Verfahren gemäss Anspruch 10. Die Unteransprüche 11 und 12 beziehen sich auf weitere, vorteilhafte Ausgestaltungen. Die Aufgabe wird weiter gelöst mit einem Verfahren gemäss Anspruch 13. Die Unteransprüche 14 bis 17 beziehen sich auf weitere, vorteilhafte Ausgestaltungen.

Die Erfindung umfasst eine Entnahmevorrichtung mit einem Abführmittel, um Fluide aus einem Behälter abzuführen. Erfindungsgemäss wird mit Sensoren ein Druck im Behälter, insbesondere der Druck des gasförmigen Fluides, ein Druck in der Entnahmevorrichtung bzw. im Abführmittel, sowie eine Höhe des sich im Behälter bildenden Flüssigkeitsspiegels gemessen. Mit Hilfe dieser gemessenen Werte und einer zum Voraus bekannten Eichkurve des Abführmittels bzw. der Entnahmevorrichtung lässt sich mit einer Signalauswertevorrichtung eine Flussrate für den gasförmigen Anteil, eine Flussrate für den flüssigen Anteil sowie weitere Kenngrössen, wie zum Beispiel das Verhältnis zwischen den Flussraten der beiden Anteile oder die gesamte Flussrate als Summe beider Anteile, bestimmen.

Die Erfindung eignet sich insbesondere zum Mischen und Messen eines aus einer Erdölquelle austretenden, mehrphasigen Fluides. Die Vorteile der Erfindung sind darin zu sehen, dass die Flussrate des flüssigen und des gasförmigen Anteils eines gemischten beziehungsweise homogenisierten Fluides sowie die mittlere spezifische Gemischdichte auf einfache Weise mittels Druck- und Temperatursensoren bestimmbar sind. Die Messvorrichtung ist sehr einfach aufgebaut, kostengünstig und wartungsfreundlich. Ein weiterer Vorteil der Erfindung ist darin zu sehen, dass die Messvorrichtung in einen Behälter integrierbar ist, der dazu dient, die Fluide vor dem Mischen in einen flüssigen sowie in einen gasförmigen Anteil zu trennen. Der Behälter kann insbesondere auch derart ausgestaltet sein, dass er ein grösseres Volumen zu halten vermag, und derart als Zwischenspeicher beziehungsweise als Buffertank dient, um Schwankungen der Zusammensetzung flüssiger und gasförmiger Fluidanteile, die zufliessen, auszugleichen. Ein weiterer Vorteil der Erfindung ist darin zu sehen, dass die Messvorrichtung in einem Buffertank integrierbar ist, und dass dadurch eine bezüglich der Strömungsrichtung nachfolgende Fördervorrichtung, zum Beispiel eine Pumpe, wahlweise innerhalb oder ausserhalb des Behälters angeordnet werden kann. Insbesondere bei Tiefseeförderanlagen für Erdölquellen kann es sich als vorteilhaft erweisen, dass eine Pumpe innerhalb des Buffertanks integrierbar ist.

Ein Vorteil der Erfindung ist darin zu sehen, dass sich mit der Messvorrichtung ein Mehrphasengemisch mit Hilfe einer Mehrphasenpumpe auf zuverlässige Weise fördern lässt. Dabei lässt sich eine Grösse des Förderprozesses, zum Beispiel ein Druckwert, als Istwert messen und als Sollwert vorgeben, wobei das erfindungsgemässe Verfahren die Drehzahl der Mehrphasenpumpe derart regelt, dass der Istwert den Sollwert zu erreichen sucht. Dieser Istwert-Sollwert-Regelung ist mit höherer Priorität eine weitere Regelung überlagert um Betriebseigenschaften der Mehrphasenpumpe zu berücksichtigen, um zum Beispiel einen vorteilhaften Betriebspunkt der Mehrphasenpumpe zu gewährleisten, oder um zum Beispiel eine schockartige Belastung der Pumpe beziehungsweise der Antriebsvorrichtung zu begrenzen.

Ein weiterer Vorteil der Erfindung ist darin zu sehen, dass sich das erfindungsgemässe Verfahren beziehungsweise die erfindungsgemässe Vorrichtung bei Erdölquellen zur Reduzierung und/oder Regelung des an der Mündungsöffnung anliegenden Druckes verwenden lässt. Dadurch lässt sich die ausfliessende Menge pro Zeiteinheit beeinflussen. Weiter lässt sich damit die Ausbeute einer Erdölquelle erhöhen. Weiter lässt sich auch eine Erdölquelle, deren Erdöl nur mit geringem Druck aus der Mündungsöffnung austritt, wirtschaftlich ausbeuten.

Ein weiterer Vorteil der Erfindung ist darin zu sehen, dass eine Mehrphasenpumpe auf zuverlässige Weise betreibbar ist, und somit eine geringe Störungsanfälligkeit aufweist, sodass es möglich ist, die Mehrphasenpumpe an Orten zu verwenden, die zur Störungsbehebung schlecht zugänglich sind, wie dies zum Beispiel bei Tiefseeförderanlagen der Fall ist.

In den Zeichnungen ist die Erfindung anhand von mehreren Ausführungsbeispielen veranschaulicht. Dabei zeigen:
- Fig. 1a: einen Behälter mit einem perforiertem Abführmittel und mehreren Sensoren;
- Fig. 1b: einen weiteren Behälter mit Abführmittel und Sensoren sowie einer integrierten Fördervorrichtung;
- Fig. 2: einen Detailausschnitt einer Eintrittsstelle eines Zuführrohres in den Behälter;
- Fig. 3a, 3b, 3c, 3d, 3e, 3f: Längsschnitte verschiedener Ausführungsformen einer Entnahmevorrichtung bzw. eines Abführmittels.
- Fig. 4: ein Blockdiagramm einer Fördervorrichtung;
- Fig. 5: eine weitere Vorrichtung zur Förderung eines Mehrphasengemisches mit einer Mehrphasenpumpe;

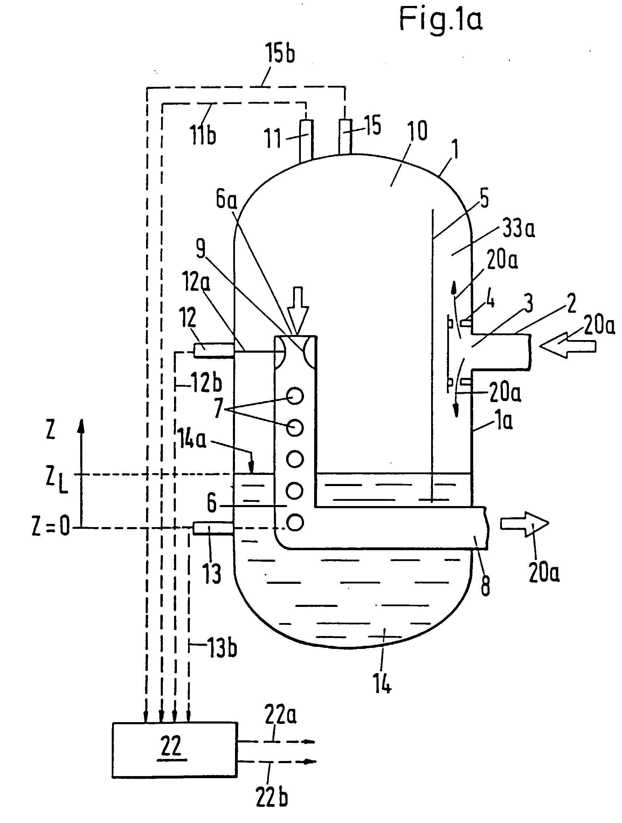

Fig. 1a zeigt einen Behälter 1, in den an einer Eintrittsöffnung 3 ein Zuführrohr 2 mündet, welches dem Behälter 1 ein in Strömungsrichtung 20a zufliessendes, mehrphasiges Fluid zuführt. Die flüssigen und gasförmigen Fluidanteile werden im Behälter 1 getrennt, wobei sich die flüssigen Anteile im unteren Bereich des Behälters 1 in einem Flüssigkeitsvolumen 14 ansammeln, und die gasförmigen Anteile sich im oberen Teil des Behälters 1, als Gasvolumen 10 ansammeln. An der Trennschicht zwischen dem Gasvolumen 10 und dem Flüssigkeitsvolumen 14 bildet sich ein Flüssigkeitsspiegel 14a, dessen aktuelle Höhe Z mit einem Sensor 13 erfasst wird, wobei eine Referenzhöhe Z = 0 definiert ist, sodass dem Flüssigkeitsspiegel 14a jeweils eine aktuelle Höhe Z_{L} zugeordnet werden kann. Im vorliegenden Ausführungsbeispiel wurde als Sensor 13 ein Drucksensor verwendet, wobei einem Fachmann natürlich weitere Messmethoden bekannt sind, die sich ebenfalls eignen würden, um die aktuelle Höhe Z_{L} zu messen. Die sich im Behälter 1 befindlichen Fluide werden über eine Entnahmevorrichtung 6,8, die mindestens ein Abführmittel 6 sowie ein daran anschliessendes Abführmittel 8 umfasst, wieder aus dem Behälter 1 abgeleitet, beziehungsweise in Strömungsrichtung 20a fliessend abgezogen. Im vorliegenden Ausführungsbeispiel ist das Abführmittel 6 vertikal zum Flüssigkeitsspiegel 14a angeordnet, und weist Öffnungen 7 auf, die während dem Normalbetrieb des Behälters 1 teilweise unter, teilweise über dem Flüssigkeitsspiegel 14a liegen. Die Öffnungen 7 dienen insbesondere zum Durchtritt der flüssigen Anteile in das Abführmittel 6, wobei die Durchmesser der einzelnen Öffnungen 7 unterschiedlich gross gewählt sein können, und wobei die Anordnung der Öffnungen 7 derart in Richtung der Höhe Z gewählt sein kann, dass der Zusammenhang zwischen der Abflussmenge des flüssigen Anteils in Funktion der Höhe Z_{L} des Flüssigkeitsspiegels 14a einen vorteilhaften Zusammenhang aufweist. Anstelle der Öffnungen 7 kann das Abführmittel 6 im Bereich ihrer Wandung zum Beispiel auch mit einem Längsschlitz versehen sein, dessen Breite die entsprechende Abflussmenge flüssiger Anteile bestimmt. Das Abführmittel 6 ist an dessen oberen Ende offen, wobei die Öffnung eine Eingangsöffnung 6a bildet, durch welche der grösste Anteil der gasförmigen Anteile aus dem Gasvolumen 10 in das Abführmittel 6 strömen. Das Abführmittel 6 weist im Bereich der Eintrittsöffnung 6a eine Venturidüse 9 auf, die über ein Verbindungsmittel 12a mit einem Drucksensor 12 verbunden ist, so dass die Flussrate des gasförmigen Anteils, der durch die Eintrittsöffnung 6a in das Abführmittel 6 fliesst, messbar ist. Nebst einer Venturidüse 9 eignen sich natürlich auch andere Messmittel zur Messung eines gasförmigen Volumenstromes, so zum Beispiel eine Blende. Im Bereich des Gasvolumens 10, im vorliegenden Ausführungsbeispiel am oberen Ende des Behälters 1, sind ein Drucksensor 11, sowie ein Temperatursensor 15 angeordnet, um die Temperatur des gasförmigen Anteiles sowie den Druck des gasförmigen Anteiles zu messen. Daraus lässt sich die Gasdichte rho des gasförmigen Anteils berechnen. Die Entnahmevorrichtung kann auch mehrere Abführmittel 6 umfassen, die alle in das Abführmittel 8 münden oder getrennt aus dem Behälter geführt werden. Für die Abflusseigenschaften jedes Abführmittels 6 beziehungsweise für die gesamte Entnahmevorrichtung 6,8 wurde eine Eichkurve bestimmt, mit deren Hilfe aus den gemessenen Werten die Flussrate der gasförmigen Anteile sowie die Flussrate der flüssigen Anteile berechenbar sind.

Im Behälter 1 kann der Eintrittsöffnung 3, wie im vorliegenden Ausführungsbeispiel dargestellt, in Flussrichtung 20a ein Flüssigkeits- oder Strahlbrecher 4 nachgelagert sein, um Schwankungen der Höhe Z_{L} des Flüssigkeitsspiegels 14a, die durch einströmende Flüssigkeitsmengen verursacht werden, zu dämpfen und um Schäden durch energiereiche Fluidpfropfen zu vermeiden. Der Flüssigkeitsbrecher 4 vermindert oder vermeidet eine stossartige Belastung der Elemente und Strukturen innerhalb des Behälters 1. Im vorliegenden Ausführungsbeispiel wird die Strömungsrichtung 20a der Fluide in vertikaler Richtung umgelenkt. Weiter ist im Behälter 1 eine Trennwand 5 angeordnet, die zwischen der Aussenwand 1a des Behälters und der Trennwand 5 im Bereich der Eintrittsöffnung 3 eine Kammer 33a bildet, mit dem Zweck, die Bewegungen des Flüssigkeitsspiegels 14a zu dämpfen. Diese Beruhigungskammer 33a weist mindestens je einen Durchgang zum Gasvolumen 10 sowie zum Flüssigkeitsvolumen 14 auf, so dass die über das Zuführrohr 2 einströmenden Fluide zum Volumen 14 gelangen. Das Abführmittel 6 ist ausserhalb der Beruhigungskammer 33a angeordnet. Die mit den Sensoren 11, 12, 13 und 15 gemessenen physikalischen Grössen werden über die zugehörigen Signalleitung 11b, 12b, 13b, 15b einer Signalverarbeitungsvorrichtung 22 zugeführt, die einen Rechner beziehungsweise eine Mikroprozessor und entsprechende Ein- und Ausgabe-Mittel umfasst, um die Signale zu erfassen und die berechneten Werte über Signalleitungen 22a, 22b einer übergeordneten Einheit oder einem Anzeigeinstrument weiterzugeben. Der Behälter 1 dient zum Mischen und Messen mehrphasiger Fluide, die über das Zuführrohr 2 zugeführt werden. Im Behälter 1 werden die mehrphasigen Fluide in einen gasförmigen und einen flüssigen Anteil getrennt. Sowohl flüssige wie gasförmige Anteile gelangen in das Abführmittel 6, werden dort vermischt und über das Abführmittel 8 aus dem Behälter 1 abgeleitet. Das Mischverhältnis der flüssigen und gasförmigen Anteile im gemischten Fluid, das abfliesst, ist abhängig vom Gasdruck im Gasvolumen 10, sowie von der aktuellen Höhe Z_{L} des Flüssigkeitsspiegels 14a.

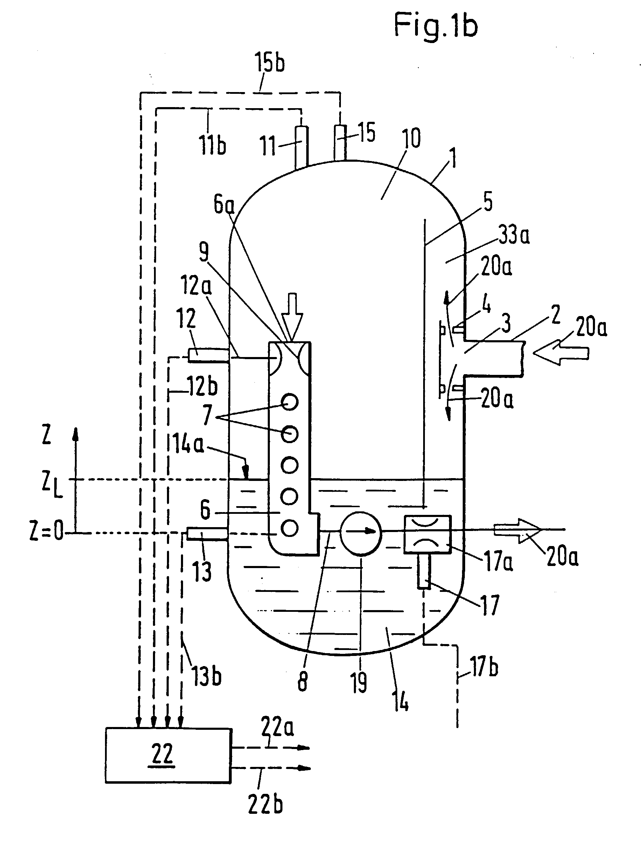

Figur 1b zeigt den bereits beschriebenen Behälter 1, der zusätzlich eine Zweiphasenpumpe 19 und eventuell eine weitere Venturidüse 17a umfasst. Das Abführmittel 6 mündet in das Abführmittel 8, welches in die Pumpe 19 mündet, welche weiter in die Venturidüse 17a mündet und daraufhin den Behälter 1 verlässt. Der Druck an der Venturidüse 17a wird mit einem Drucksensor 17 erfasst und über eine Signalleitung 17b einem Rechner 22 zugeführt. Aus dem Signal des Drucksensors 17 ist die Flussrate des mehrphasigen, homogenisierten Fluides berechenbar. Die Venturidüse 17a kann bezüglich der Strömungsrichtung 20a auch vor der Pumpe 19 angeordnet sein, um die Flussrate des mehrphasigen Fluides zu messen. Die die Pumpe 19 antreibende Antriebsvorrichtung kann ebenfalls im Behälter 1 integriert sein, oder auch ausserhalb des Behälters 1 angeordnet sein, so dass die Antriebsvorrichtung über eine durch die Behälterwand 1a verlaufende Antriebsachse mit der Zweiphasenpumpe 19 verbunden ist. Ein Vorteil der vorliegenden Anordnung ist darin zu sehen, dass die Pumpe 19 innerhalb des Behälters 1 liegt und somit durch diesen geschützt ist.

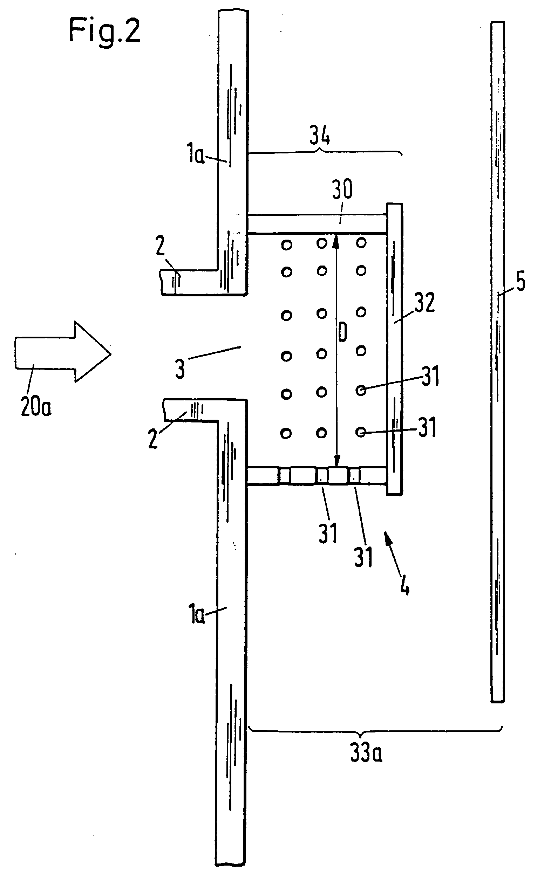

Figur 2 zeigt den Aufbau eines Flüssigkeitsbrechers 4 im Detail. Ein durch das Zuführrohr 2 in Strömungsrichtung 20a zufliessendes Mehrphasengemisch kann bezüglich der flüssigen und gasförmigen Anteile in einem grösseren Bereich schwanken, so dass kurzfristig grosse Mengen flüssiger Anteile der Eintrittsöffnung 3 zugeführt werden können. Der Flüssigkeitsbrecher 4 dient dazu, das einströmende Fluid in mehrere Teilströme aufzuteilen, die dadurch in unterschiedlicher Richtung verlaufen, um somit Einbauten im Behälter 1 vor Beschädigungen zu schützen. Der dargestellte Flüssigkeitsbrecher 4 besteht aus einem Abdeckelement 34, das unmittelbar anschliessend an die Eintrittsöffnung 3 im Behälter 1 angeordnet ist, und das im vorliegenden Ausführungsbeispiel ein zylinderförmiges Teil 30 mit Durchbrechungen 31 umfasst, sowie ein Abdeckteil 32, welches das Teil 30 auf der einen Seite verschliesst, wobei das Teil 30 auf der anderen Seite mit der Eintrittsöffnung 3 verbunden ist. Dem Flüssigkeitsbrecher 4 ist eine Trennwand 5 vorgelagert, so dass zwischen der Behälterwand la und der Trennwand 5 eine Beruhigungskammer 33a entsteht.

Die gasförmigen und flüssigen Anteile der dem Behälter 1 zugeführten Fluide könne, wie zum Beispiel bei der Förderung von Rohöl, grösseren zeitlichen Schwankungen unterliegen. Um diese Schwankungen im nachfolgenden Abführmittel 8 beziehungsweise der Entnahmevorrichtung 6,8 zu reduzieren ist es möglich, das Volumen des Behälters 1 so auszulegen, dass der Behälter 1 als Zwischenspeicher, beziehungsweise als Buffertank, dient. Somit kann vermieden werden, dass die Dichte des abgezogenen, homogenisierten Fluides kurzfristig grössere Schwankungen aufweist.

Es ist bekannt, dass sich die Ausbeute einer Erdölquelle erhöhen lässt, wenn der Druck an der Austrittsstelle der Bohrung reduziert wird. Eine bevorzugte Anwendungsmöglichkeit des erfindungsgemässen Behälters 1 ist daher, das Zuführrohr 2 mit der Austrittsstelle der Bohrung zu verbinden und dem Abführmittel 8 nachfolgend eine Pumpe 19 anzuschliessen, sodass der Druck im Behälter 1 reduziert wird. Dem Abführmittel 8 wird vorzugsweise eine Zweiphasenpumpe 19 nachgeschaltet. Die im Behälter 1 gemessenen Grössen des mehrphasigen Fluides können als Regelgrössen dienen, um die Zweiphasenpumpe 19 zu regeln. Für den Betrieb beziehungsweise die Regelung der Zweiphasenpumpe 19 ist es notwendig, dass die mittlere Gemischdichte rhoₘᵢₓ des homogenisierten Fluides kurzfristig nicht stark ansteigt, um zu vermeiden, dass die Zweiphasenpumpe 19 plötzlich überlastet wird oder in einen unzulässigen Betriebsbereich gerät, z.B. ein Betriebsbereich wo die Strömung abreist.

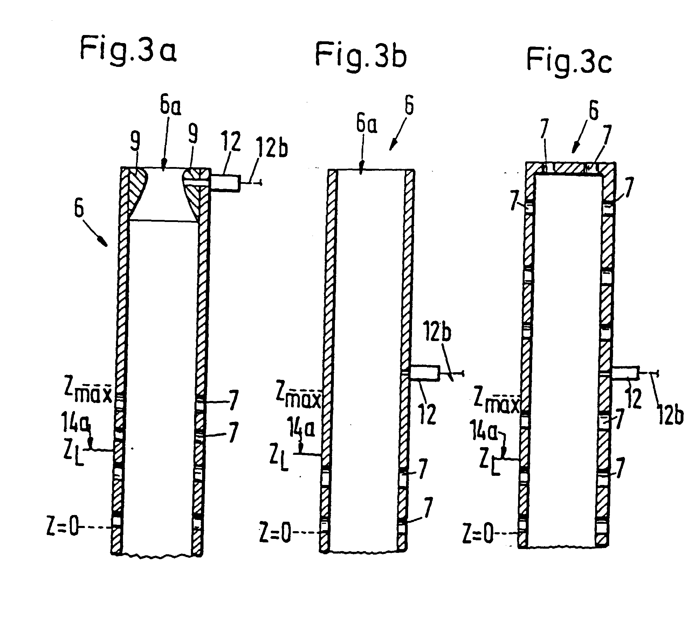

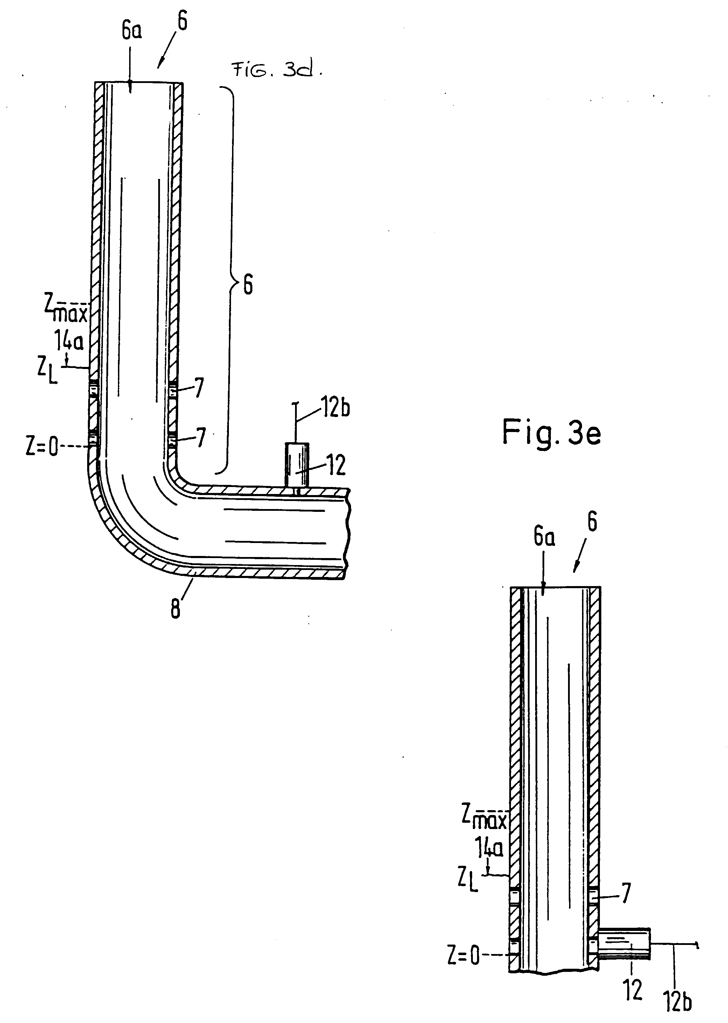

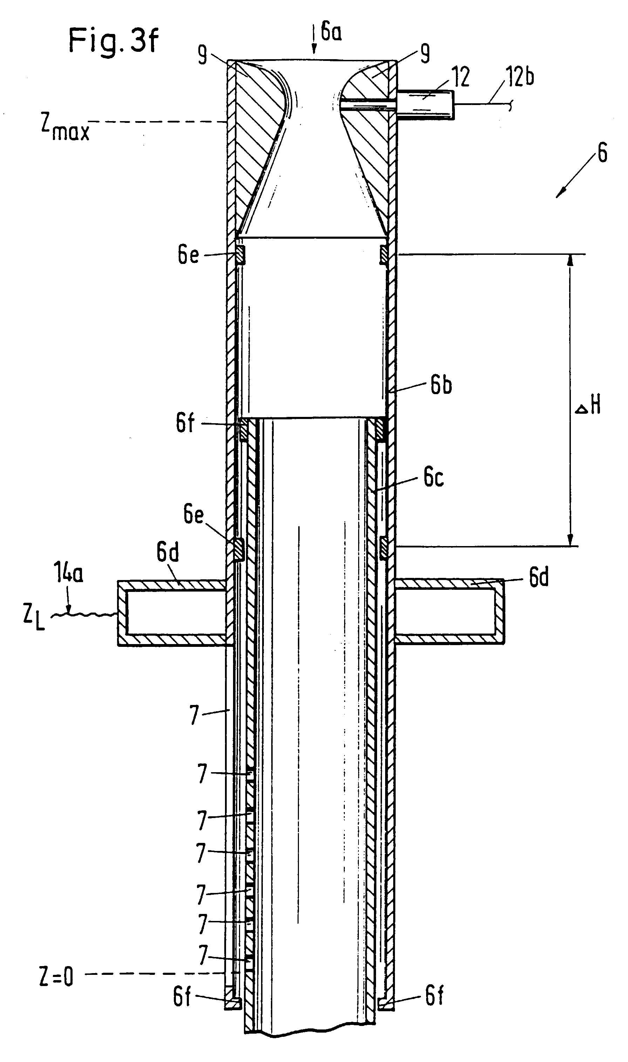

Die Figuren 3a, 3b, 3c, 3d, 3e und 3f zeigen Längsschnitte unterschiedlicher Ausführungsformen von Entnahmevorrichtungen 6,8 beziehungsweise von perforierten oder mit Öffnungen 7 versehenen Abführmitteln 6. Als eine Entnahmevorrichtung 6,8 wird eine Vorrichtung bezeichnet, die dazu dient, die Fluide aus dem Innenraum 10 abzuziehen und aus dem Behälter 1 hinaus zu fördern, oder einer innerhalb des Behälters 1 angeordneten Mehrphasenpumpe 19 zuzuleiten, wobei die Entnahmevorrichtung 6,8 ein möglichst homogenes Gemisch der Fluide bewirkt. Die Entnahmevorrichtung 6, 8 umfasst die Abführmittel 6,8. In jedem der Entnamevorrichtungen 6,8 beziehungsweise der Abführmittel 6 wird mit einem Drucksensor 12 ein Druck gemessen. Für jede Ausführungsform der Entnahmevorrichtungen 6,8 beziehungsweise der Abführmittel 6 kann eine Eichkurve bestimmt werden, welche erlaubt, aus der Druckdifferenz zwischen dem Druck im Gasvolumen 10 und dem Druck in der Entnahmevorrichtung 6,8 und der gemessenen, aktuellen Höhe Z_{L} des Flüssigkeitsspiegels die Flussrate der in die Entnahmevorrichtung 6,8 einströmenden gasförmigen und flüssigen Fluidanteile zu berechnen. Die in den Fig. 3a-3f dargestellten Abführmittel 6,8 befinden sich in einem Zustand eines Normalbetriebes. Während einem Normalbetrieb schwankt der Flüssigkeitsspiegel 14a in einem Bereich der Höhe Z=0 bis zu einer maximalen Höhe Zₘₐₓ, wobei die aktuelle Höhe des Flüssigkeitsspiegels Z_{L} beträgt. Während einem Normalbetrieb der erfindungsgemässen Vorrichtung durchdringt das Abführmittel 6 einen sich zwischen den flüssigen und gasförmigen Anteilen bildender Flüssigkeitsspiegel 14a.
Die in Fig. 3a dargestellte Ausführungsform eines Abführmittels 6 weist an der Eingangsöffnung 6a eine Venturidüse 9 auf mit einem entsprechenden Drucksensor 12. Eine Venturidüse an der Eingangsöffnung 6a weist den Vorteil auf, dass sich der Gasstrom relativ genau messen lässt. Die Durchbrechungen 7 sind derart angeordnet, dass bei einem maximalen Flüssigkeitsstand Zₘₐₓ alle Durchbrechungen 7 von Flüssigkeit umgeben sind. In Fig. 3b ist eine weitere Ausführungsform eines Abführmittels 6 dargestellt, das üblicherweise einen runden Querschnitt aufweist, am oberen Ende vollständig geöffnet ist, und dessen Drucksensor 12 knapp über der Grenze des maximalen Flüssigkeitsstandes Zₘₐₓ angeordnet ist. Fig. 3c zeigt eine weitere Ausführungsform eines Abführmittels 6, das eine Vielzahl von Durchbrechungen 7 aufweist. Die drei dargestellten Ausführungsformen sind Beispiele aus einer Vielzahl möglicher Ausgestaltungen von Abführmitteln 6. Fig. 3d zeigt eine weitere Ausführungsform einer Entnahmevorrichtung 6,8, die einen Drucksensor 12 aufweist, der derart am Abführmittel 8 angeordnet ist, dass der Druck des gemischten Fluides innerhalb des Abführmittels 8 gemessen wird. Fig. 3e zeigt ein Abführmittel 6 mit einem Drucksensor 12, der auf der Höhe von Z=0 angeordnet ist, sodass der solcherart angeordnete Drucksensor 12 ebenfalls den Druck des gemischten Fluides innerhalb des Abführmittels 8 erfasst. Fig. 3f zeigt ein weiteres Ausführungsbeispiel eines Abführmittel 6, das ein erstes, feststehendes Teil 6c sowie ein in vertikaler Richtung bewegliches Teil 6b umfasst. Das feststehende Teil 6c weist oben ein Führungsteil 6f auf, an der Aussenwandung Durchbrüche 7 und mündet unten in ein nachfolgendes Abführmittel 8. Das bewegliche Teil 6b weist unten ein Führungsteil 6f auf, um die gegenseitige Lage der beiden Teile 6a, 6b in Längsrichtung zu definieren. Am beweglichen Teil 6b ist ein Schwimmkörper 6d angeordnet, der durch den flüssigen Anteil einen Auftrieb erfährt, sodass die Lage des Schwimmkörpers 6d und dadurch die Lage des beweglichen Teils 6b dem Pegel Z_{L} des Flüssigkeitsspiegel 14a folgt. Im Innern des beweglichen Teils 6b sind zwei Anschläge 6e angeordnet, die mit dem Führungsteil 6f in Wirkverbindung treten können, sodass der maximale mögliche Weg des beweglichen Teils 6b auf eine Differenz ΔH beschränkt wird. Das bewegliche Teil 6b weist eine Durchbrechung 7 zum Durchtritt der flüssigen Fluidanteile auf. Das bewegliche Teil 6b weist oben eine Eintrittsöffnung 6a auf, mit einer Venturidüse 9 und einem Sensor 12. Ein Vorteil des Schwimmkörpers 6d ist darin zu sehen, dass er gewährleistet, dass durch die Eintrittsöffnung 6a nur gasförmige Fluidanteile strömen, sodass mit der Messvorrichtung an der Eintrittsöffnung 6a, die zum Beispiel auch als eine Blende ausgeführt sein kann, eine eindeutige Messung des Gasstromes (Flussrate der gasförmigen FLuidanteile)möglich ist. Dabei wird das Abführmittel 6 vorteilhafterweise derart innerhalb des Behälters 1 angeordnet, dass durch die Durchbrechungen 7 nur flüssige Fluidanteile und durch die Eintrittsöffnung 6a nur gasförmige Fluidanteile in das Abführmittel 6 strömen, sodass die Messvorrichtung an der Eintrittsöffnung 6a den gesamten Anteil der in das Abführmittel 6 einströmenden gasförmigen Fluidanteile misst. Die Messung der Höhe Z_{L} des Flüssigkeitsspiegels 14a kann im vorliegenden Ausführungsbeispiel auch mit einem Wegsensor erfolgen, der die Bewegung des beweglichen Teils 6b in Längsrichtung erfasst.

Das Verfahren zum Mischen und Messen eines strömenden, mehrphasigen Fluides, das sich zum Betrieb der vorgängig beschriebenen Vorrichtung eignet, wird im folgenden näher erläutert.

Für jede geometrische Ausführungsform eines Abführmittels 6 beziehungsweise einer Entnahmevorrichtung 6,8 wird vorgängig ein experimenteller oder rechnerischer Zusammenhang ermittelt, um eine Flussrate Q' der flüssigen Anteile in Abhängigkeit der Höhe Z_{L} des Flüssigkeitsspiegels 14a sowie der Flussrate Q" der gasförmigen Anteile bestimmen zu können.
Dazu wird ein relativer Flüssigkeitsstand FLL definiert, der das Verhältnis zwischen einer tatsächlichen, gemessenen Höhe Z_{L} des Flüssigkeitsspiegels 14a und einer theoretischen Höhe Z_{L,th} eines Flüssigkeitsspiegels 14a beschreibt. Die theoretische Höhe Z_{L,th} bezeichnet diejenige Höhe des Flüssigkeitsspiegels 14a, die an dem Abführmittel 6 anliegen würde, wenn kein gasförmiger Anteil durch das Abführmittel 6 fliessen würde, das heisst, wenn die Flussrate Q" gleich 0 wäre. Aus dem Gasfluss Q" lässt sich die Geschwindigkeit c das Gases berechnen.
Für jede geometrische Ausführungsform eines Abführmittels 6 wird der Zusammenhang: FLL = f(rho * c²) experimentell oder rechnerisch ermittelt (FLL gleich eine Funktion von (rho * c²)). Der Zusammenhang ist unter anderem abhängig von der Grösse des Innendurchmessers des Abführmittels 6, sowie von der Anordnung und den Durchmessern der Öffnungen 7.

Zur Durchführung des Verfahrens wird ein Rechner 22, umfassend einen Prozessor mit ROM und RAM, sowie mit Eingabe- und Ausgabemitteln verwendet, um die gemessenen Werte der Sensoren 11, 12, 13, 15 über Signalleitungen 11b, 12b, 13b, 15b einzulesen und die berechneten Werte anzuzeigen oder über Signalleitungen 22a, 22b einer weiteren Vorrichtung zu übermitteln. Der experimentelle oder rechnerische Zusammenhang FLL = F(rho * c²), der eine Eichkurve für das im Behälter 1 befindliche Abführmittel 6 beziehungsweise für die gewählte Anordnung darstellt, ist im Rechner 22 in der Speichervorrichtung abgelegt.

Das erfindungsgemässe Verfahren umfasst die folgenden Schritte:
1. Die Fluide werden über das Zuführrohr 2 dem Behälter 1 zugeführt und in die flüssigen und gasförmigen Anteile getrennt, unter Bildung eines Flüssigkeitsspiegels 14a mit einer aktuellen Höhe Z_{L}.
2. Mit einem Sensor 13, der im vorliegenden Ausführungsbeispiel als Drucksensor ausgeführt ist, wird die aktuellen Höhe Z_{L} des Flüssigkeitsspiegels 14a gemessen.
3. Die Flussrate Q" des gasförmigen Anteiles, der in das Abführmittel 6 fliesst, ist aus einer Druckdifferenz zwischen dem Druck im Gasvolumen 10 und dem Druck im Abführmittel 6 beziehungsweise im Abführmittel 8 unter Berücksichtigung der aktuellen Höhe Z_{L} mit Hilfe einer Eichkurve des Abführmittels 6 berechenbar. Gasförmige Anteile treten auch durch diejenigen Öffnungen 7 in das Abführmittel 6, die über dem Flüssigkeitsspiegel 14a liegen. Diese gasförmigen Anteile werden bei der Berechnung der Flussrate Q" durch die Eichkurve mit berücksichtigt.
4. Die Temperatur und der Druck der gasförmigen Anteile werden im Gasvolumen 10 gemessen, und daraus die Gasdichte rho berechnet.
5. Aus der Flussrate Q" sowie der Gasdichte rho ist die Geschwindigkeit c des Gases berechenbar. Mit Hilfe des experimentellen oder des gerechneten Zusammenhangs FLL = f(rho * c²) lässt sich aus der gemessenen Höhe Z_{L} eine theoretische Höhe Z_{L,th} berechnen.
6. Aus der theoretischen, am Abführmittel 6 anliegenden Höhe Z_{L,th}, lässt sich durch Integration über die Höhe des Abführmittels, unter Berücksichtigung der Anordnung der Öffnungen 7, die in das Abführmittel 6 eintretende Flussrate Q' des flüssigen Anteils berechnen.
7. Nachdem die Flussraten der flüssigen Anteile Q' sowie der gasförmigen Anteile Q" bekannt sind, lassen sich auf einfache weise die folgenden Grössen berechnen:
   - das Verhältnis gasförmige Anteile zu flüssige Anteile: GLR = Q" / Q'
   - die Gemischdichte rhoₘᵢₓ
   - die Flussrate Qₘᵢₓ des gemischten Fluides als Summe von Q' und Q".
8. Die flüssigen und gasförmigen Anteile werden im Abführmittel 6 gemischt und homogenisiert, sodass das Fluid in einem homogenisierten Zustand den Behälter 1 verlässt.

Erfindungsgemäss kann die Flussrate Q" auch mit einer Blende, einer Einlaufdüse, wie z.B. der in Fig 3f dargestellten Düse 9, oder Druckdifferenzmessung über andere Öffnungen bestimmt werden. Auch kann diese Messung durch andere Geräte zur Durchflussmessung bewerkstelligt werden.

Die Flussrate Q" der gasförmigen Anteile sowie die Flussrate Q' der flüssigen Anteile, die durch die Entnahmevorrichtung 6,8 strömen, lassen sich mit einem weiteren erfindungsgemässen Verfahren berechnen. Dieses Verfahren löst eine Gleichung mit zwei Unbekannten durch ein iteratives Verfahren.

Die unbekannten Grössen sind Q' und Q".
Bekannt ist die Geometrie der Entnahmevorrichtung 6,8 sowie deren experimentell bestimmte Eigenschaft FLL = f(rho * c²). Weiter wird die Dichte rho' der flüssigen Anteile als ungefähr konstant und bekannt angenommen.

Dieses weitere erfindungsgemässe Verfahren umfasst die folgenden Schritte:
1. Die Fluide werden über das Zuführrohr 2 dem Behälter 1 zugeführt und in die flüssigen und gasförmigen Anteile getrennt, unter Bildung eines Flüssigkeitsspiegels 14a mit einer aktuellen Höhe Z_{L}.
2. Gemessen wird der Druck sowie die Temperatur der gasförmigen Anteile im Gasvolumen 10 des Behälters 1, woraus die Gasdichte rho berechnet wird.
3. Gemessen wird die aktuelle Höhe Z_{L} des Flüssigkeitsspiegels 14a.
4. Gemessen wird weiter ein Druck des homogenisierten Fluides in der Entnahmevorrichtung 6,8 zum Beispiel in einer Anordnung eines Sensors 12 gemäss Fig. 3d oder zum Beispiel mit einer Venturidüse 17a gemäss Fig. 1b, wobei die Venturidüse 17a wie in Fig. 1b dargestellt nach der Mehrphasenpumpe 19 angeordnet sein kann, oder auch vor der Mehrphasenpumpe 19.
5. Eine Verhältniszahl a der volumetrischen Anteile zwischen Q' und Q" wird angenommen.
6. Aus der Verhältniszahl a wird bei bekannten Dichten rho und rho' die mittlere Gemischdichte rhoₘᵢₓ berechnet.
7. Aus dem unter Punkt 4 gemessenen Druck wird die Flussrate Qmix des homogenisierten Fluides gemessen.
8. Aus der Flussrate Qmix wird über die Verhältniszahl a die Flussrate Q" der gasförmigen Anteile sowie die Flussrate Q' der flüssigen Anteile berechnet.
9. Aus der Flussrate Q", der Gasdichte rho und der Geometrie der Entnahmevorrichtung 6,8 wird die Gasgeschwindigkeit c berechnet.
10. Mit Hilfe des Zusammenhangs FLL = f(rho * * c²) wird aus der gemessenen Höhe Z_{L} eine theoretische Höhe Z_{L,th} berechnen.
11. Aus der theoretischen, am Abführmittel 6 anliegenden Höhe Z_{L,th}, lässt sich durch Integration über die Höhe des Abführmittels, unter Berücksichtigung der Anordnung der Öffnungen 7, die in das Abführmittel 6 eintretende Flussrate Q' des flüssigen Anteils berechnen.
12. Eine neue Verhältniszahl α₁ zwischen der Flussrate Q' der flüssigen Anteile und der Flussrate Q" der gasförmigen Anteile wird berechnet.
13. Die berechnete Verhältniszahl α₁ wird mit der angenommenen Verhältniszahl α verglichen. Sofern die beiden Verhältniszahlen über einen vorgebbaren Betrag voneinander abweichen wird eine neue Verhältniszahl a angenommen und die Iteration beginnend bei Punkt 6 wieder fortgeführt. Andernfalls wird die Iteration abgebrochen und die gesuchten Werte für Q' und Q" liegen vor.

Nachdem die Flussraten der flüssigen Anteile Q' sowie der gasförmigen Anteile Q" bekannt sind, lassen sich auf einfache weise die folgenden Grössen berechnen:
- das Verhältnis gasförmige Anteile zu flüssige Anteile: GLR = Q" / Q'
- die Gemischdichte rhoₘᵢₓ
- die Flussrate Qₘᵢₓ des gemischten Fluides als Summe von Q' und Q".

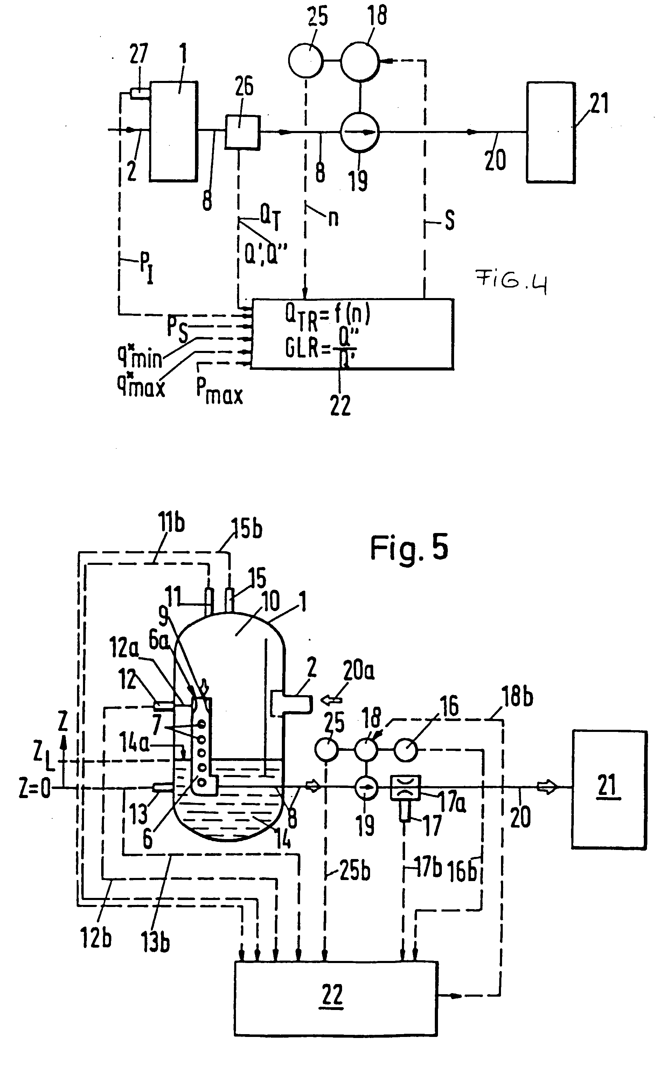

Auf die Messung der Temperatur der gasförmigen Anteile im Gasvolumen 10 des Behälters 1 kann verzichtet werden, wenn die Temperatur ansonst bekannt ist und etwa konstant bleibt. Fig. 4 zeigt zwischen einem Behälter 1 und einer Verarbeitungsanlage 21 eine Fördervorrichtung, um ein über ein Zuführrohr 2 in den Behälter 1 strömendes Mehrphasengemisch über ein Abführrohr 8, eine Mehrphasenpumpe 19 und ein Pumpenabführrohr 20 in Flussrichtung 20a der Verarbeitungsanlage 21 zuzuleiten. Die Mehrphasenpumpe 19 ist über eine Welle 18a mit einer Antriebsvorrichtung 18 sowie mit einer Drehzahlmessvorrichtung 25 verbunden. Als Antriebsvorrichtung 18 dient im vorliegenden Ausführungsbeispiel ein Elektromotor, wobei sich auch andere Antriebe, wie z.B. ein Verbrennungsmotor, eignen würden. Der Pumpe 19 ist bezüglich der Flussrichtung 20a eine erfindungsgemässe Messvorrichtung 26 vorgelagert, um eine Flussrate Q_{T} des durch das Abführrohr 8 strömenden Mehrphasengemisches zu messen. Weiter misst die Messvorrichtung 26 eine Flussrate Q' der flüssigen Anteile und eine Flussrate Q" der gasförmigen Anteile, die der Regelvorrichtung 22 übermittelt werden. Daraus Berechnet die Regelvorrichtung 22 eine Verhältniszahl GLR = Q" / Q'. Mit einer Messvorrichtung 27 wird eine Prozessgrösse als ein Istwert P_{I} erfasst. Eine Signalverarbeitungs- und Regelvorrichtung 22, die auch Eingabe- und Ausgabemittel umfasst, erfasst die gemessenen Werte n, Q_{T} und P_{I} und erzeugt eine Stellgrösse S, um die Antriebsvorrichtung 18 anzusteuern und insbesondere deren Drehzahl n zu regeln. Die Regelvorrichtung 22 umfasst vorzugsweise einen Rechner beziehungsweise einen Mikroprozessor zur Berechnung der Stellgrösse S.

Bei der Regelung der Pumpe 19 zur Förderung des Mehrphasengemisches sind verschiedene Betriebszustände zu unterscheiden.
1. Betriebszustand: Normalbetrieb
   Der Regelvorrichtung 22 ist ein einstellbarer Sollwert P_{S} vorgegeben. Mit einer Messvorrichtung 27 wird eine Prozessgrösse erfasst und dieser Istwert P_{I} der Regelvorrichtung 22 zugeführt. Während einem Normalbetrieb ist die Regelvorrichtung 22 bestrebt, über die Stellgrösse S die Drehzahl n der Pumpe 19 derart zu regeln, dass der Istwert P_{I} dem Sollwert P_{S} entspricht. Bei der Förderung des Mehrphasengemisches gibt es eine Mehrzahl von Prozessgrössen die sich zur Regelung eignen würden. Als Prozessgrösse zur Erfassung eines Istwertes P_{I} eignet sich zum Beispiel ein Druck des Mehrphasengemisches in einer Vorrichtung 1, welche der Pumpe 19 bezüglich der Strömungsrichtung 20a vorgelagert ist, wie dies in Fig. la dargestellt ist. Die Vorrichtung 1 ist vorzugsweise als Buffertank ausgebildet. Weitere, alternative Prozessgrössen sind zum Beispiel ein Druck des Mehrphasengemisches in einer Vorrichtung 21, welche der Pumpe 19 bezüglich der Strömungsrichtung 20a nachgelagert ist, oder eine Druckdifferenz über der Pumpe 19, oder die Flussrate Q_{T}.
   In einer bevorzugten Ausführungsform wird der an der Austrittsöffnung der Ölquelle anliegende Druck beziehungsweise der im Buffertank anliegende Druck als Prozessgrösse verwendet, die als Istwert P_{I} gemessen und durch die Regelung weitgehend konstant gehalten wird. Der Sollwert P_{S} kann von einer übergeordneten Leiteinheit oder vom Bedienungspersonal verändert werden.
2. Betriebszustand: Überwachung eines zulässigen Betriebsbereiches der Pumpe
   In diesem Betriebszustand wird für die Regelung der Drehzahl n die Leistungscharakteristik der Pumpe 19 mit berücksichtigt, um zu gewährleisten, dass die Pumpe in einem zulässigen Betriebsbereich betrieben wird. Jede Pumpe weist einen sogenannten Bestpunkt (BEP) auf, der sich durch einen optimalen Wirkungsgrad auszeichnet, wobei die in diesem Punkt geförderte Flussrate als optimaler Förderstrom Q_{TR} bezeichnet wird. Der Bestpunkt hängt nebst der Geometrie der Pumpe von deren Drehzahl n ab. In der Regelvorrichtung 22 sind die erforderlichen Daten gespeichert, um den jeweils optimalen Förderstrom Q_{TR} in Funktion der aktuellen Drehzahl n zu berechnen. Die aktuelle Flussrate Q_{T} darf nur um einen bestimmten Betrag von dem optimalen Förderstrom Q_{TR} abweichen, ansonst in der Pumpe 19 Strömungsabrisse, Schwingungen oder Pulsationen auftreten. Die Grenzwerte, bei denen diese Effekte auftreten können, werden als eine Pumpgrenze bezeichnet. Der Regelvorrichtung 22 ist ein Begrenzungswert vorgebbar, oberhalb dessen die aktuelle Flussrate Q_{T} zu liegen hat, um diese nachteiligen Effekte zu vermeiden. Im vorliegenden Ausführungsbeispiel ist der Regelvorrichtung 22 ein Begrenzungswert durch einen Wert q*ₘᵢₙ vorgegeben, wobei dieser Wert eine Verhältniszahl Q_{T}/Q_{TR} beschreibt, sodass bei vorgegebenem Wert von Q_{TR} und q*ₘᵢₙ eine Flussrate Q_{Tmin} bestimmt wird. Die Regelvorrichtung 22 berechnet das Verhältnis Q_{T}/Q_{TR} ständig neu.
   Eine Mehrphasenpumpe kann derart betrieben werden, dass einzig der Begrenzungswert ständig überwacht wird, um zu gewährleisten, dass die Pumpgrenze nie unterschritten wird. Wird von der Regelvorrichtung zusätzlich ein Istwert P_{I} geregelt, so erfolgt die Überwachung des Begrenzungswertes gegenüber der Regelung des Istwerte P_{I} mit erhöhter Priorität, um ständig zu gewährleisten, dass die Pumpgrenze nicht unterschritten wird. Wird der Begrenzungswert q*ₘᵢₙ unterschritten, so wird die Drehzahl n erhöht, um die Mehrphasenpumpe oberhalb der Pumpgrenze zu betreiben. In diesem Fall ist somit eine Abweichung zwischen Istwert P_{I} und Sollwert P_{S} erlaubt, um dafür den Begrenzungswert einzuhalten. Ein Begrenzungswert kann als relativer Wert, z.B. 85% von Q_{TR}, oder als absoluter Wert, z.B. als ein Wert Qₘᵢₙ der Regelvorrichtung 22 vorgegeben werden.
   Der zulässige Betriebsbereich einer Mehrphasenpumpe wird weiter durch eine maximal zulässige Flussrate Qₘₐₓ begrenzt, wobei die maximale Flussrate Qₘₐₓ von der jeweiligen Drehzahl n abhängt. Als ein weiterer Begrenzungswert q*ₘₐₓ lässt sich eine Verhältniszahl Q_{T}/Q_{TR} definieren, sodass bei vorgegebenem Wert von Q_{TR} und q*ₘₐₓ eine Flussrate Q_{Tmax} bestimmt wird. Die Regelung 22 überwacht den Begrenzungswert q*ₘₐₓ, wobei beim Überschreiten dess vorgegebenen Begrenzungswertes q*ₘₐₓ die Drehzahl n reduziert wird. Somit sind durch die beiden Begrenzungswerte q*ₘᵢₙ und q*ₘₐₓ ein Betriebsbereich der Mehrphasenpumpe vorgebbar.
   Bei der Regelung der Pumpe 19 zur Förderung des Mehrphasengemisches kann ein weiterer Betriebszustand überwacht werden.
3. Betriebszustand: Überwachung der Leistung
   Weist die Pumpe eine hohe Drehzahl n auf, was insbesondere bei hohen Werten der Verhältniszahl GLR beziehungsweise bei tiefen Gemischdichten auftritt, so ist es erforderlich die Drehzahl n zu reduzieren, sobald die Gemischdichte sich unzulässig erhöht. Insbesondere bei einer schnellen Erhöhung der Gemischdichte besteht die Gefahr, dass die Antriebsvorrichtung 18 überlastet wird, dass ein zulässiges Drehmoment überschritten wird, oder dass die Pumpe, beispielsweise ein Lager oder eine Schaufel, beschädigt wird. Die Überwachung der von der Antriebsvorrichtung 18 abgegebenen Leistung dient zum Schutz der Fördervorrichtung vor mechanischer Beschädigung. Die abgegebene Leistung kann zum Beispiel gemessen werden, indem die vom Elektromotor 18 aufgenommene Leistung gemessen wird. Die abgegebene Leistung kann auch als eine Funktion der Drehzahl n oder als eine Funktion der Verhältniszahl GLR annähernd berechnet werden. Im Ausführungsbeispiel gemäss Fig. 1b führt die Regelvorrichtung 22 mit oberster Priorität eine Überwachung der Leistung durch, wobei die Regelvorrichtung die maximal zulässige Leistung aus der Verhältniszahl GLR ableitet, und wobei bei Überschreitung der maximalen Leistung Pmax die Regelvorrichtung 22 die Drehzahl n reduziert. Die Überwachung der Pumpgrenze sowie die Regelung des Istwertes P_{I} erfolgt mit geringerer Priorität.
   Fig. 5 zeigt die erfindungsgemässe Vorrichtung zusammen mit einem Buffertank 1. Das Zuführrohr 2 ist mit einem Bohrloch einer Erdölquelle verbunden, sodass das ausströmenden Mehrphasengemisch in Flussrichtung 20a in den Buffertank 1 strömt. Im Buffertank 1 werden die flüssigen und gasförmigen Anteile getrennt, und es bildet sich ein Flüssigkeitsvolumen 14 sowie ein Gasvolumen 10, die durch einen Flüssigkeitsspiegel 14a voneinander abgegrenzt sind. Ein Abführmittel 6 mit Durchbrechungen 7 durchdringt den Flüssigkeitsspiegel 14a, sodass sowohl flüssige wie gasförmige Anteile über das Abführmittel 6 und ein nachfolgendes Abführrohr 8 zur Mehrphasenpumpe 19 und über ein nachfolgendes Pumpenabführrohr 20 in eine Verarbeitungsanlage 21 gelangen. Das Abführmittel 6 weist eine Eingangsöffnung 6a mit einer Venturidüse 9 auf, um mit einem Drucksensor 12 den eintretenden Gasstrom zu messen. Weiter sind am Buffertank 1 ein Drucksensor 11 angeordnet, um den Druck im Gasvolumen 10 zu messen, ein Temperatursensor 15, um die Temperatur des Gasvolumens 10 zu messen, sowie ein Drucksensor 13, um eine aktuelle Höhe Z_{L} des Flüssigkeitsspiegels 14a zu messen. Die gemessenen Werte werden über elektrische Signalleitungen 11b, 12b, 13b, 15b der Regelvorrichtung 22 zugeführt, die aus den Messwerten die für die Regelung erforderlichen Werte wie die Flussrate Q_{T}, die Flussrate Q' der flüssigen Anteile, die Flussrate Q" der gasförmigen Anteile oder den Istwert P_{I} berechnet. Die erforderlichen Messwerte lassen sich direkt am Buffertank erfassen. Dies weist den Vorteil auf, dass die Pumpe 19 wahlweise innerhalb oder ausserhalb des Buffertanks 1 angeordnet werden kann. Die Regelvorrichtung 22 erfasst weiter mit einer Drehzahlmessvorrichtung 25 die Drehzahl n der Pumpe 19, mit einer Leistungsmessvorrichtung 16 die an die Pumpe 19 abgegebene Leistung, sowie mit einer Venturidüse 17a mit Drucksensor 17 einen weiteren Messwert für die aktuelle Flussrate Q_{T}, um die Genauigkeit der Messung der Flussrate Q_{T} durch eine zweite Messung zu verbessern. Die Messwerte werden der Regelvorrichtung 22 über Signalleitungen 16b, 17b, 25b zugeführt, von der Regelvorrichtung 22 verarbeitet und dienen zur Berechnung einer Steuergrösse S, die über die Signalleitung 18b der Antriebsvorrichtung 18 zugeführt wird.

## Patentansprüche

1. Vorrichtung zum Mischen und Messen eines strömenden, mehrphasigen Fluides mit mindestens einem flüssigen und einem gasförmigen Anteil, umfassend
- einen Behälter (1), um die flüssigen und gasförmigen Anteile zu trennen,
- ein Zuführrohr (2), das in den Behälter (1) mündet,
- eine Entnahmevorrichtung (6,8), um die Fluide abzuziehen, wobei die Entnahmevorrichtung ein Abführmittel (6) mit Durchbrüchen (7) umfasst, welches derart angeordnet ist, dass es bei einem Normalbetrieb durch einen sich zwischen den flüssigen und gasförmigen Anteilen bildenden Flüssigkeitsspiegel (14a) dringt,
dadurch gekennzeichnet,
dass ein Sensor (11) bestimmt ist den Wert eines Druckes im Behälter (1) zu messen,
dass ein Sensor (12) bestimmt ist den Wert eines Druckes in der Entnahmevorrichtung (6,8) zu messen,
dass mindestens ein Sensor (13) bestimmt ist den Wert einer Höhe (Z_{L}) des Flüssigkeitsspiegels (14a) zu messen,
und dass die Sensoren (11,12,13) über Signalleitungen (11b, 12b, 13b) mit einer Signalerfassungs- und
Signalauswertevorrichtung (22) verbunden sind, um aus den gemessenen Werten mindestens eine Flussrate (Q") des gasförmigen Anteils, sowie eine Flussrate (Q') des flüssigen Anteils zu berechnen.

2. Vorrichtung nach Anspruch 1, dadurch gekennzeichnet, dass das Abführmittel (6) eine Eingangsöffnung (6a) aufweist, die bei Normalbetrieb oberhalb des Flüssigkeitsspiegels (14a) liegt, und dass an der Eingangsöffnung (6a) eine Durchflussmessvorrichtung (9) mit einem Sensor (12) angeordnet ist.

3. Vorrichtung nach einem der Ansprüche 1 oder 2, dadurch gekennzeichnet, dass die Entnahmevorrichtung mehrere Abführmittel (6) umfasst, wobei an mindestens einem Abführmittel (6) einSensor (12) angeordnet ist.

4. Vorrichtung nach einem der Ansprüche 1 bis 3, dadurch gekennzeichnet, dass der Sensor (11) und ein Temperatursensor (15) den oberhalb des Flüssigkeitsspiegels (14a) liegenden gasförmigen Anteil überwachen, um daraus dessen Dichte zu bestimmen.

5. Vorrichtung nach einem der Ansprüche 1 bis 4, dadurch gekennzeichnet, dass das Zuführrohr (2) an einer Eintrittsöffnung (3) in den Behälter (1) eintritt, dass die Eintrittsöffnung (3) durch ein Abdeckelement (34) abgeschlossen ist, und dass das Abdeckelement (34) eine Mehrzahl von Durchbrechungen (31) aufweist, um ein einströmendes Fluid in mehrere Teilströme, die in unterschiedlicher Richtung verlaufen, aufzuteilen.

6. Vorrichtung nach Anspruch 5, dadurch gekennzeichnet, dass das Abdeckelement ein zylinderförmiges Teil (30) mit Durchbrechungen (31) umfasst, sowie ein Abdeckteil (32), welches das Teil (30) auf der einen Seite verschliesst, und dass das Teil (30) auf der anderen Seite mit der Eintrittsöffnung (3) verbunden ist.

7. Vorrichtung nach einem der Ansprüche 1 bis 6, dadurch gekennzeichnet, dass im Behälter (1) eine Trennwand (5) angeordnet ist, derart, dass sich zwischen einer Behälterwand (1a) und der Trennwand (5) ein Zwischenraum (33a) bildet,
dass die Trennwand (5) Durchgänge zum restlichen Innenraum des Behälters (1) aufweist,
dass die Eintrittsöffnung (3) in den Zwischenraum (33a) mündet, um Schwankungen des Flüssigkeitsspiegels (14a) zu reduzieren,
und dass das Abführmittel (6) ausserhalb des Zwischenraumes (33a) liegt.

8. Vorrichtung nach einem der Ansprüche 1 bis 7, dadurch gekennzeichnet, dass das Abführmittel (6) über ein Abführmittel (8) mit einer Pumpe (19) verbunden ist, welche innerhalb oder ausserhalb des Behälters (1) angeordnet ist.

9. Vorrichtung nach einem der Ansprüche 1 bis 8, dadurch gekennzeichnet, dass der Pumpe (19) in Strömungsrichtung eine Durchflussmessvorrichtung (17a) vorgeschaltet oder nachgeschaltet ist, um eine Flussrate (Qₘᵢₓ) des gemischten Fluides zu messen, wobei die Durchflussmessvorrichtung (17a) innerhalb oder ausserhalb des Behälters (1) angeordnet ist.

10. Verfahren zum Mischen und Messen eines strömenden, mehrphasigen Fluides, dadurch gekennzeichnet,
- dass das Fluid einem Behälter (1) zugeführt wird und darin in einen flüssigen und einen gasförmigen Anteil getrennt wird, wobei sich ein Flüssigkeitsspiegel (14a) bildet,
- dass die flüssigen und gasförmigen Anteile über eine Entnahmevorrichtung (6,8), die ein Abführmittel (6) mit Durchbrüchen (7) umfasst, aus dem Behälter (1) abgeleitet und gemischt werden,
- dass mit einem Sensor (13) eine aktuelle Höhe (Z_{L}) des Flüssigkeitsspiegels (14a) gemessen wird,
- dass mit einem Sensor (11) ein Druck des gasförmigen Anteils im Behälter (1) gemessen wird,
- dass mit einem Sensor (12) ein Druck in der Entnahmevorrichtung (6,8) gemessen wird,
- und dass mittels einer Signalverarbeitungsvorrichtung (22), in der eine Eichkurve für die Entnahmevorrichtung (6,8) gespeichert ist, aus den gemessenen Werten eine Flussrate (Q') des flüssigen Anteils und eine Flussrate (Q") des gasförmigen Anteils berechnet wird.

11. Verfahren nach Anspruch 10, dadurch gekennzeichnet, dass die Temperatur der gasförmigen Anteile im Behälter (1) gemessen wird und daraus deren Dichte (Rho) berechnet wird.

12. Verfahren nach einem der Ansprüche 10 oder 11, dadurch gekennzeichnet, dass aus den Flussraten (Q') und (Q")
- ein Verhältnis zwischen der Flussrate (Q") der gasförmigen Anteile und der Flussrate (Q') der flüssigen Anteile berechnet wird,
- oder eine mittlere Gemischdichte (rhoₘᵢₓ) des gemischten Fluides berechnet wird,
- oder eine Flussrate (Qₘᵢₓ) des gemischten Fluides berechnet wird.

13. Verfahren zur Förderung eines Mehrphasengemisches mit einer Mehrphasenpumpe (19) und einer Vorrichtung gemäss einem der Ansprüche 1 bis 9, dadurch gekennzeichnet,
- dass ein Sollwert (P_{S}) einer prozessrelevanten Grösse vorgegeben wird,
- dass ein Istwert (P_{I}) der prozessrelevanten Grösse gemessen wird,
- dass eine Drehzahl (n) der Mehrphasenpumpe (19) gemessen wird,
- dass in Abhängigkeit der Drehzahl (n) aus Kenndaten der Mehrphasenpumpe (19) eine optimale Flussrate (Q_{TR}) berechnet wird
- dass eine Flussrate (Q', Q", Q_{T}) des durch die Mehrphasenpumpe (19) geförderten Mehrphasengemisches gemessen wird,
- dass in einem Normalbetrieb die Drehzahl (n) derart regelt wird, dass der Istwert (P_{I}) den Sollwert (P_{S}) anstrebt,
- dass, wenn das Verhältnis Q_{T}/Q_{TR} einen vorgebbaren Begrenzungswert (q*ₘᵢₙ) unterschreitet, die Drehzahl (n) erhöht wird,
- und dass, wenn ein Verhältnis Q_{T}/Q_{TR} einen vorgebbaren Begrenzungswert (q*ₘₐₓ) überschreitet, die Drehzahl (n) reduziert wird.

14. Verfahren nach Anspruch 13, dadurch gekennzeichnet, dass der Sollwert (P_{S}) eine der folgenden Grössen umfasst
- einen Druck des Mehrphasengemisches in einer Vorrichtung (1), welche der Mehrphasenpumpe (19) bezüglich einer Strömungsrichtung (20a) vorgelagert ist,
- einen Druck des Mehrphasengemisches in einer Vorrichtung (21), welche der Mehrphasenpumpe (19) bezüglich der Strömungsrichtung (20a) nachgelagert ist,
- eine Druckdifferenz über der Mehrphasenpumpe (19),
- die Flussrate (Q_{T}).

15. Verfahren nach Anspruch 13 oder 14, dadurch gekennzeichnet,
dass aus der Flussrate (Q') der flüssigen Anteile und der Flussrate (Q") der gasförmigen Anteile eine Verhältniszahl GLR, welche dem Quotienten von Q"/Q' entspricht, berechnet wird,
und dass, wenn die Verhältniszahl GLR einen vorgebbaren Wert unterschreitet, die Drehzahl (n) reduziert wird.

16. Verfahren nach einem der Ansprüche 13 bis 14, dadurch gekennzeichnet, dass eine von einer Antriebsvorrichtung (18) an die Mehrphasenpumpe (19) abgegebene Leistung (P) gemessen wird,
und dass, wenn die abgegebene Leistung (P) einen vorgebbaren Wert (Pₘₐₓ) überschreitet, die Drehzahl (n) reduziert wird.

17. Verfahren nach einem der Ansprüche 13 bis 16, dadurch gekennzeichnet,
dass die Drehzahl (n) der Mehrphasenpumpe (19) derart geregelt wird,
dass in erster Priorität ein Grenzwert der Grösse (GLR) oder der abgegebenen Leistung (P) eingehalten wird,
dass in zweiter Priorität ein Begrenzungswert (q*ₘᵢₙ) eingehalten wird, um eine Pumpgrenze nicht zu unterschreiten,
dass in dritter Priorität ein Begrenzungswert (q*ₘₐₓ) eingehalten wird, um eine zulässige Flussrate (Qₘₐₓ) nicht zu überschreiten,
dass in vierter Priorität der Sollwert (P_{S}) eingehalten wird.

18. Tiefseeförderanlage oder Landförderanlage für
Erdölquellen, Buffertank oder Pumpe (19) mit einer Vorrichtung gemäss einem der Ansprüche 1 bis 9, oder betrieben mit einem Verfahren gemäss einem der Ansprüche 10 bis 17.

## Claims

1. Apparatus for mixing and measuring a flowing multi-phase fluid with at least one liquid and one gaseous component comprising
- a container (1) in order to separate the liquid and gaseous components,
- a supply tube (2) which opens into the container (1),
- a removal apparatus (6, 8) in order to draw off the fluids, with the removal apparatus comprising a drainage means (6) with apertures (7) that is arranged in such a manner that it penetrates a liquid surface (14a) which forms between the liquid and gaseous components during a normal operation,
characterised
in that a sensor (11) is provided to measure the value of a pressure in the container (1);
in that a sensor (12) is provided to measure the value of a pressure in the removal apparatus (6, 8);
in that at least one sensor (13) is provided to measure the value of a height (Z_{L}) of a liquid surface (14a);
and in that the sensors (11, 12, 13) are connected to a signal reception and evaluation system (22) via signal lines (11b, 12b, 13b) in order to calculate at least a flow rate (Q") of the gaseous component as well as a flow rate (Q') of the liquid component from the measured values.

2. Apparatus in accordance with claim 1 characterised in that the drainage means (6) has an inlet opening (6a) which lies above the liquid surface (14a) during normal operation; and in that a through-flow measurement apparatus (9) with a sensor (12) is arranged at the inlet opening (6a).

3. Apparatus in accordance with claim 1 or claim 2 characterised in that the removal apparatus comprises a plurality of drainage means (6), with a sensor (12) being placed at at least one drainage means (6).

4. Apparatus in accordance with one of the claims 1 to 3 characterised in that the sensor (11) and a temperature sensor (15) monitor the gaseous component lying above the liquid surface (14a) in order to determine its density therefrom.

5. Apparatus in accordance with one of the claims 1 to 4 characterised in that the supply tube (2) enters into the container (1) at an inlet opening (3); in that the inlet opening (3) is closed off by a cover element (34); and in that the cover element (34) has a plurality of apertures (31) in order to divide an inflowing fluid into a plurality of partial flows which flow in different directions.

6. Apparatus in accordance with claim 5 characterised in that the cover element comprises a cylindrical part (30) with apertures (31) as well as a cover part (32) which closes off the part (30) at the one end; and in that the part (30) is connected to the inlet opening (3) at the other end.

7. Apparatus in accordance with one of the claims 1 to 6 characterised in that a partition wall (5) is arranged in the container (1) in such a manner that an intermediate space (33a) forms between a container wall (1a) and the partition wall (5);
in that the partition wall (5) has passages to the remaining inner space of the container (1);
in that the inlet opening (3) opens into the intermediate space (33a) in order to reduce fluctuations of the liquid surface (14a);
and in that the drainage means (6) lies outside the intermediate space (33a).

8. Apparatus in accordance with one of the claims 1 to 7 characterised in that the drainage means (6) is connected via a drainage means (8) to a pump (19) which is placed inside or outside the container (1).

9. Apparatus in accordance with one of the claims 1 to 8 characterised in that a through-flow measuring apparatus (17a) is placed ahead of or after the pump (19) in the direction of flow in order to measure a flow rate (Qₘᵢₓ) of the mixed fluid, with the through-flow measuring apparatus (17a) being placed inside or outside the container (1).

10. Method for mixing and measuring a flowing, multi-phase fluid characterised
- in that the liquid is conducted to a container (1) and separated therein into a liquid and a gaseous component, with a liquid surface (14a) forming;
- in that the liquid and gaseous components are conducted out of the container (1) and mixed via a removal apparatus (6, 8) which comprises a drainage means (6) with apertures (7);
- in that an actual height (Z_{L}) of the liquid surface (14a) is measured by means of a sensor (13);
- in that a pressure of the gaseous component in the container (1) is measured by means of a sensor (11);
- in that a pressure in the removal apparatus (6, 8) is measured by means of a sensor (12);
- and in that a flow rate (Q') of the liquid component and a flow rate (Q") of the gaseous component is calculated from the measured values by means of a signal evaluation apparatus (22) in which a calibration curve for the removal apparatus (6, 8) is stored.

11. Method in accordance with claim 10 characterised in that the temperature of the gaseous components in the container (1) is measured and their density (rho) is calculated therefrom.

12. Method in accordance with one of the claims 10 or 11 characterised in that from the flow rates (Q') and (Q")
- a ratio between the flow rate (Q") of the gaseous components and the flow rate (Q') of the liquid components is calculated,
- or an average gas density (rhoₘᵢₓ) of the mixed fluid is calculated,
- or a flow rate (Qₘᵢₓ) of the mixed fluid is calculated.

13. Method for forwarding a multi-phase mixture by means of a multi-phase pump (19) and an apparatus in accordance with one of the claims 1 to 9,
characterised
- in that a desired value (P_{S}) of a process-relevant value is prespecified;
- in that an actual value (P_{I}) of a process-relevant value is measured;
- in that a rotational speed (n) of the multi-phase pump (19) is measured;
- in that an ideal flow rate (Q_{TR}) is calculated from the characteristic data of the multi-phase pump (19) in dependence on the rotational speed (n);
- in that a flow rate (Q', Q", Q_{T}) of the multi-phase mixture forwarded by the multi-phase pump (19) is measured;
- in that during a normal operation the rotational speed (n) is regulated in such a manner that the actual value (P_{I}) strives towards the desired value (P_{S}) ;
- in that the rotational speed (n) is increased when the ratio Q_{T}/Q_{TR} drops below a predeterminable limiting value (q*ₘᵢₙ);
- and in that the rotational speed (n) is reduced when a ratio Q_{T}/Q_{TR} exceeds a predeterminable limiting value (q*ₘₐₓ).

14. Method in accordance with claim 13 characterised in that the desired value (P_{S}) comprises one of the following parameters:
- a pressure of the multi-phase pump in an apparatus (1) which is placed ahead of the multi-phase pump (19) with respect to a direction of flow (20a),
- a pressure of the multi-phase mixture in an apparatus (21) which is placed after the multi-phase pump (19) with respect to the direction of flow (20a),
- a pressure difference across the multi-phase pump (19), or
- the flow rate (Q_{T}).

15. Method in accordance with claim 13 or 14 characterised in that a ratio figure GLR which corresponds to the quotient Q"/Q' is calculated from the flow rate (Q') of the liquid components and the flow rate (Q") of the gaseous components;
and in that the rotational speed (n) is reduced when the ratio figure GLR drops below a predeterminable value.

16. Method in accordance with one of the claims 13 to 14 characterised in that a power (P) delivered to the multi-phase pump (19) by a drive device (18) is measured;
and in that the rotational speed (n) is reduced when the power (P) delivered exceeds a predeterminable value (Pₘₐₓ).

17. Method<in accordance with one of the claims 13 to 16 characterised
in that the rotational speed (n) of the multi-phase pump (19) is regulated in such a manner that at first priority a limiting value of the quantity (GLR) or of the power (P) delivered is maintained,
that at second priority a limiting value (q*ₘᵢₙ) is maintained in order not to fall below a pump limit,
that at third priority a limiting value (q*ₘₐₓ) is maintained in order not to exceed a permissible flow rate (Qₘₐₓ),
and that at fourth priority the desired value (Ps) is maintained.

18. Deep sea forwarding plant or land forwarding plant for oil wells, buffer tank or pump (19) with an apparatus in accordance with one of the claims 1 to 9, or operated by a method in accordance with one of the claims 10 to 17.

## Revendications

1. Dispositif pour le mélange et la mesure d'un fluide d'écoulement multiphase avec au moins une part liquide et une part gazeuse, comportant :
- un réservoir (1) pour séparer les parts liquide et gazeuse,
- un tuyau d'amenée (2) qui débouche dans le réservoir (1),
- un dispositif de soutirage (6, 8) pour soutirer les fluides, le dispositif de soutirage comportant un moyen d'évacuation (6) avec des perçages (7) qui est disposé de telle sorte que lors d'un fonctionnement normal celui-ci passe à travers un niveau de liquide (14a) se formant entre les parts liquide et gazeuse, caractérisé en ce qu'un capteur (11) est désigné pour mesurer la valeur d'une pression dans le réservoir (1), qu'un capteur (12) est désigné pour mesurer la valeur d'une pression dans le dispositif de soutirage (6, 8), en ce qu'au moins un capteur (13) est désigné pour mesurer la valeur d'une hauteur (Z_{L}) du niveau de liquide (14a) et en ce que les capteurs (11, 12, 13) sont reliés par des conduits d'acheminement de signaux (11b, 12b, 13b) à un dispositif de saisie et d'exploitation de signaux (22) pour calculer à partir des valeurs mesurées au moins une vitesse d'écoulement (Q") de la part gazeuse ainsi qu'une vitesse d'écoulement (Q') de la part liquide.

2. Dispositif selon la revendication 1, caractérisé en ce que le moyen d'évacuation (6) présente une ouverture d'entrée (6a) qui, en cas de fonctionnement normal, se situe au-dessus du niveau de liquide (14a) et en ce qu'il est disposé à l'ouverture d'entrée (6a) un dispositif de mesure de débit (9) avec un capteur (12).

3. Dispositif selon l'une des revendications 1 ou 2, caractérisé en ce que le dispositif de soutirage comporte plusieurs moyens d'évacuation (6), et à au moins un moyen d'évacuation (6) étant disposé un capteur (12).

4. Dispositif selon l'une des revendications 1 à 3, caractérisé en ce que le capteur (11) et un capteur de température (15) surveillent la part gazeuse se trouvant au-dessus du niveau de liquide (14a) pour définir à partir de celle-ci la densité de celle-ci.

5. Dispositif selon l'une des revendications 1 à 4, caractérisé en ce que le tuyau d'amenée (2) entre à une ouverture d'entrée (3) dans le réservoir (1), en ce que l'ouverture d'entrée (3) est fermée par un élément de recouvrement (34) et en ce que l'élément de recouvrement (34) présente une pluralité de perçages (31) pour répartir un fluide affluent en plusieurs courants partiels qui s'étendent dans des directions différentes.

6. Dispositif selon la revendication 5, caractérisé en ce que l'élément de recouvrement comporte une partie cylindrique (30) avec des perçages (31) ainsi qu'une partie de recouvrement (32) qui ferme la partie (30) sur un côté et en ce que la partie (30) est reliée de l'autre côté à l'ouverture d'entrée (3).

7. Dispositif selon l'une des revendications 1 à 6, caractérisé en ce qu'il est disposé dans le réservoir (1), une paroi de séparation (5) de façon à former entre une paroi de réservoir (la) et la paroi de séparation (5) un espace intermédiaire (33a), en ce que la paroi de séparation (5) présente des passages vers l'espace intérieur restant du réservoir (1), en ce que l'ouverture d'entrée (3) débouche dans l'espace intermédiaire (33a) pour diminuer des variations du niveau de liquide (14a) et en ce que le moyen d'évacuation (6) se situe à l'extérieur de l'espace intermédiaire (33a).

8. Dispositif selon l'une des revendications 1 à 7, caractérisé en ce que le moyen d'évacuation (6) est relié par un moyen d'évacuation (8) à une pompe (19) qui est disposée à l'intérieur ou à l'extérieur du réservoir (1).

9. Dispositif selon l'une des revendications 1 à 8, caractérisé en ce qu'il est monté, dans le sens d'écoulement, en amont ou en aval de la pompe (19) un dispositif de mesure de débit (17a) pour mesurer une vitesse d'écoulement (Qₘᵢₓ) du fluide mélangé, le dispositif de mesure de débit (17a) étant disposé à l'intérieur ou à l'extérieur du réservoir (1).

10. Procédé pour le mélange et la mesure d'un fluide d'écoulement multiphase, caractérisé
- en ce que le fluide est amené dans un réservoir (1) et est séparé dans celui-ci en des parts liquide et gazeuse, et un niveau de liquide (14a) se forme,
- en ce que les parts liquide et gazeuse sont évacuées du réservoir par un dispositif de soutirage (6, 8) comportant un moyen d'évacuation (6) avec des perçages (7), et sont mélangées,
- en ce qu'on mesure à l'aide d'un capteur (13) la hauteur actuelle (Z_{L}) du niveau de liquide (14a),
- en ce qu'on mesure à l'aide d'un capteur (11) une compression de la part gazeuse dans le réservoir (1),
- en ce qu'on mesure à l'aide d'un capteur (12) une pression dans le dispositif de soutirage (6, 8),
- et en ce qu'on calcule au moyen d'un dispositif de traitement des signaux (22) dans lequel est stockée une courbe d'étalonnage pour le dispositif de soutirage (6, 8), à partir des valeurs mesurées une vitesse d'écoulement (Q') de la part liquide et une vitesse d'écoulement (Q") de la part gazeuse.

11. Procédé selon la revendication 10, caractérisé en ce que la température des parts gazeuses dans le réservoir (1) est mesurée et qu'à partir de celle-ci, la densité de celles-ci (rho) est calculée.

12. Procédé selon l'une des revendications 10 ou 11, caractérisé en ce qu'on calcule à partir des vitesses d'écoulement (Q') et (Q") :
- un rapport entre la vitesse d'écoulement (Q") des parts gazeuses et la vitesse d'écoulement (Q') des parts liquides,
- ou bien qu'une densité moyenne de mélange (rhoₘᵢₓ) du fluide mélangé est calculée,
- ou bien qu'une vitesse d'écoulement (Qₘᵢₓ) du fluide mélangé est calculée.

13. Procédé pour le transport d'un mélange multiphase avec une pompe multiphase (19) et un dispositif selon l'une des revendications 1 à 9, caractérisé
- en ce qu'une valeur de consigne (P_{S}) d'une grandeur de procédé est prédéfinie,
- en ce qu'une valeur réelle (P_{I}) de la grandeur de procédé est mesurée,
- en ce qu'une vitesse de rotation (n) de la pompe multiphase (19) est mesurée,
- en ce qu'en fonction de la vitesse de rotation (n), à partir de données caractéristiques de la pompe multiphase (19), une vitesse d'écoulement optimale (Q_{TR}) est calculée,
- en ce qu'une vitesse d'écoulement (Q', Q", Q_{T}) du mélange multiphase convoyé par la pompe multiphase (19) est mesurée,
- en ce qu'en fonctionnement normal, la vitesse de rotation (n) est réglée de telle sorte que la valeur réelle (P_{I}) cherche à atteindre la valeur de consigne (P_{S}),
- en ce que, lorsque le rapport Q_{T}/Q_{TR} passe en dessous d'une valeur limite prédéfinie (q*ₘᵢₙ), la vitesse de rotation (n) est augmentée,
- et en ce que, lorsqu'un rapport Q_{T}/Q_{TR} dépasse une valeur limite prédéfinie (q*ₘₐₓ), la vitesse de rotation (n) est diminuée.

14. Procédé selon la revendication 13, caractérisé en ce que la valeur de consigne (P_{S}) comprend l'une des grandeurs suivantes
- une pression du mélange multiphase dans un dispositif (1) qui est placée, relativement à une direction d'écoulement (20a), en amont de la pompe multiphase (19),
- une pression du mélange multiphase dans un dispositif (21) qui, relativement à la direction d'écoulement (20a), est disposée en aval de la pompe multiphase (19),
- une différence de pression au-dessus de la pompe multiphase (19),
- la vitesse d'écoulement (Q_{T}).

15. Procédé selon la revendication 13 ou 14, caractérisé en ce qu'on calcule à partir de la vitesse d'écoulement (Q') des parts liquides et de la vitesse d'écoulement (Q") des parts gazeuses un rapport GLR qui correspond au quotient de Q"/Q',
- et en ce que, lorsque le rapport GLR passe sous une valeur prédéfinie, la vitesse de rotation (n) est diminuée.

16. Procédé selon l'une des revendications 13 à 14, caractérisé en ce qu'une capacité (P) émise par un dispositif d'entraînement (18) à la pompe multiphase (19) est mesurée,
et en ce que, lorsque la capacité émise (P) dépasse une valeur prédéfinie (Pₘₐₓ), la vitesse de rotation (n) est diminuée.

17. Procédé selon l'une des revendications 13 à 16, caractérisé en ce que la vitesse de rotation (n) de la pompe multiphase (19) est réglée de façon
- à respecter en première priorité une valeur limite de la grandeur (GLR) ou de la capacité émise (P),
- à respecter en deuxième priorité une valeur limite (q*ₘᵢₙ) pour ne pas passer sous une limite de pompe,
- à respecter en troisième priorité une valeur limite (q*ₘₐₓ) afin de ne pas dépasser une vitesse d'écoulement admise (Qₘₐₓ),
- à respecter en quatrième priorité la valeur de consigne (P_{S}).

18. Installation d'extraction en haute mer ou installation d'extraction à terre pour des sources de pétrole brut, réservoir tampon ou pompe (19) avec un dispositif conformément à l'une des revendications 1 à 9, ou amenée à fonctionner selon un procédé conformément à l'une des revendications 10 à 17.
